# EUROPÄISCHE PATENTSCHRIFT

(11) **EP 3 341 191 B1**
(45) Veröffentlichungstag und Bekanntmachung des Hinweises auf die Patenterteilung: **02.10.2019**
(21) Anmeldenummer: 16757867.3
(22) Anmeldetag: 25.08.2016
(51) Int. Cl.: B30B 5/02, B32B 37/10

(54) **LAMINIERWERKZEUG SOWIE VERFAHREN ZUM LAMINIEREN VON MEHREREN IN EINEM STAPEL ANGEORDNETEN SCHICHTEN**
LAMINATING TOOL AND METHOD FOR LAMINATING A PLURALITY OF LAYERS ARRANGED IN A STACK
DISPOSITIF DE STRATIFICATION ET PROCÉDÉ POUR STRATIFIER PLUSIEURS COUCHES EMPILÉES

(30) Priorität: 25.09.2015 DE 102015116267
(43) Veröffentlichungstag der Anmeldung: 04.07.2018
(73) Patentinhaber: Bundesdruckerei GmbH, 10969 Berlin (DE)
(72) Erfinder: DRESSEL, Olaf, 14641 Wustermark (DE); KULIKOVSKA, Olga, 14165 Berlin (DE); KULIKOVSKY, Lazar, 14165 Berlin (DE); WILKE, Andreas, 13509 Berlin (DE); KIND, Marian, 16348 Wandlitz (DE)
(74) Vertreter: Mammel und Maser
(86) Internationale Anmeldenummer: PCT/EP2016/070073
(87) Internationale Veröffentlichungsnummer: WO 2017/050520

(56) Entgegenhaltungen:
- WO-A2-2013/034137
- US-A1- 2002 189 755

## Beschreibung

Die Erfindung betrifft ein Laminierwerkzeug für eine Laminiervorrichtung sowie eine Laminiervorrichtung zum Laminieren von in einem Stapel angeordneten Schichten als auch ein Verfahren zum Laminieren von mehreren in einem Stapel angeordneten Schichten zu einem Laminatverbund.

Die Herstellung eines Laminatverbundes, wie beispielsweise einer Identifikationskarte, Scheckkarte oder einer Personalisierdatenseite für buchartige Dokumente, der aus mehreren übereinander liegenden Schichten besteht, die nach dem Laminieren fest miteinander verbunden sind, erfolgt durch eine Laminiervorrichtung einer Plattenlaminationsanlage, welche ein Oberwerkzeug und ein Unterwerkzeug umfasst. An diesem Oberwerkzeug und Unterwerkzeug sind sogenannte Pressbleche befestigt. Auf dieses Pressblech wird ein Presspolster, beispielsweise aus einem Filzmaterial, aufgelegt, bevor ein aus mehreren Schichten bestehender Stapel auf das Presspolster aufgelegt wird. Anschließend wird auf die Oberseite des Stapels ein weiteres Presspolster aufgelegt, so dass das an dem Oberwerkzeug befestigte Pressblech darauf während des Laminiervorganges aufliegt. Die Einbringung der Presspolster erfolgt, um einen Ausgleich von einem verkippten Stapel oder von lokalen Unebenheiten in dem Stapel zu erzielen und eine gleichmäßige Flächenpressung auf den Laminatverbund aufzubringen.

Ein solches Herstellverfahren weist den Nachteil auf, dass ein erhöhter Energiebedarf notwendig ist, um diese Presspolster aufzuheizen und anschließend wieder zu kühlen. Zudem ist erforderlich, dass ergänzend zum Presspolster auch die jeweiligen an der Ober- und Unterseite der Laminiervorrichtung vorgesehenen Pressbleche, aufzuheizen und zu kühlen sind. Darüber hinaus bedarf es einen erhöhten Zeit- und Kostenaufwand in der Handhabung für die Laminierung, da die Presspolster regelmäßig wegen Verschleißerscheinungen ausgetauscht werden müssen.

Aus der DE 10 2010 031 421 A1 ist eine Laminiervorrichtung zum Laminieren eines mehrlagigen Dokumentes bekannt, welches zwei Laminierplatten umfasst, zwischen denen das Dokument anordenbar ist. Die Laminierplatten umfassen elektrische Anschlüsse zum Aufheizen der Laminierplatten. Gegenüberliegend sind Labyrinthplatten vorgesehen, die einen umlaufenden Rand aufweisen und eine Anzahl von Stegen umfasst, um einen mäanderförmigen Kanal zwischen einem Kühlmitteleintritt und einem Kühlmittelaustritt der Labyrinthplatte zu schaffen. Die Laminierplatten werden elektrisch aufgeheizt und anschließend nach dem Laminieren wird das Dokument mit einem Kühlmittel, vorzugsweise einer Kühlflüssigkeit, gekühlt.

Aus der US 2002/0189755 A1 ist des Weiteren eine Laminiervorrichtung mit einer oberen und unteren Laminierplatte bekannt, zwischen denen ein mehrlagiges Dokument anordenbar ist. Jede der Laminierplatten weist einen Zulauf und einen Ablauf auf, um ein Kühlmedium durch einen mäanderförmigen Kanal hindurchzuführen. Ergänzend sind elektrische Heizelemente in jeder der beiden Laminierplatten angeordnet.

Der Erfindung liegt die Aufgabe zugrunde, ein Laminierwerkzeug zu schaffen, welches ein schnelles Aufheizen und Abkühlen zur Durchführung eines Laminiervorgangs sowie einen Ausgleich von lokalen Unebenheiten im Stapel ermöglicht. Des Weiteren liegt der Erfindung die Aufgabe zugrunde, eine Laminiervorrichtung vorzuschlagen, mit der in einfacher Weise der Laminiervorgang eines aus mehreren Schichten bestehenden Stapels ermöglicht ist. Darüber hinaus liegt der Erfindung die Aufgabe zugrunde, ein Verfahren zum Laminieren von mehreren in einem Stapel angeordneten Schichten vorzuschlagen, bei welchem schnelle Prozess- und Zykluszeiten ermöglicht werden.

Die der Erfindung zugrundeliegende Aufgabe wird durch ein Laminierwerkzeug für eine Laminiervorrichtung gelöst, welche eine Prägeplatte sowie eine Trägerplatte aufweist, zwischen denen eine Tragstruktur, insbesondere rippen- oder stegförmige Tragstruktur, vorgesehen ist, wobei die Tragstruktur von einer Außenwand umgeben ist und mit der Prägeplatte und der Trägerplatte ein geschlossenes Innenvolumen bildet und über zumindest einen Zulauf und zumindest einen Ablauf mit einem Medium durchströmbar ist. Ein solches Laminierwerkzeug weist den Vorteil auf, dass anstelle von einem Prägepolster, wie beispielsweise eines Filzes, und eines Pressbleches nur ein Bauteil erforderlich ist, welches dieselben Funktionen erfüllt. Zudem können die trägen Massen reduziert werden, wodurch ein schnelles Aufheizen und Abkühlen des Laminierwerkzeuges gegeben ist. Bevorzugt ist die Laminiervorrichtung eine Durchlauflaminationsanlage. Die Prägeplatte des Laminierwerkzeuges weist zumindest eine von einer Membran umgebenden Stempelfläche auf. Ein solches Laminierwerkzeug ermöglicht, dass das Heizen als auch das Kühlen mittels einem durchströmbaren Medium ermöglicht ist. Gleichzeitig kann durch das Heiz- und Kühlmedium auch entsprechender Druck im Laminierwerkzeug aufgebaut werden. Die Stempelfläche kann zusätzlich auf den Stapel von Schichten zugeführt werden, um eine zusätzliche Presskraft aufzubringen, so dass lokale Unebenheiten und/oder ein verkippter Stapel ausgeglichen werden kann.

Bevorzugt ist vorgesehen, dass die Trägerplatte, die Tragstruktur sowie die die Tragstruktur umgebende Außenwand und die Prägeplatte als ein monolithisches Bauteil ausgebildet sind. Bevorzugt wird ein solches Bauteil in einem sogenannten 3D-Druckverfahren hergestellt. Dies kann beispielsweise durch Lasersintern oder Laserschmelzen erfolgen. Dadurch wird ermöglicht, dass die Tragstruktur eine Vielzahl von Ausnehmungen, Durchbrechungen, Strömungskanälen oder dergleichen aufweisen kann, so dass ein Medium zum Heizen und/oder Kühlen des Laminierwerkzeuges zwischen der Trägerplatte und der Prägeplatte durchströmen kann. Insbesondere kann durch die Ausgestaltung der Tragstruktur eine hohe Durchflussrate des Mediums erzielt werden.

Die Prägeplatte, die Trägerplatte und die Tragstruktur sind bevorzugt aus Metall, insbesondere aus Titan oder Edelmetall, hergestellt. Hierbei handelt es sich um besonders gut temperaturleitfähige Metalle. Zudem weisen diese den Vorteil auf, dass diese beständig gegenüber einer Vielzahl von möglichen Heiz- und/oder Kühlmedien sind, die zum Einsatz kommen können.

Bevorzugt ist vorgesehen, dass die Prägeplatte dicker als die Trägerplatte ausgebildet ist. Dadurch kann eine hohe Druckbelastung auf den Stapel aufgebracht und eine gleichmäßige Kraftverteilung zum Stapel erzielt werden.

Des Weiteren ist bevorzugt vorgesehen, dass die Außenwand als elastische Membrane ausgebildet ist. Beispielsweise kann eine flexible Metallfolie vorgesehen sein. Dabei werden bevorzugt Metalle oder Metalllegierungen mit einer guten Wärmeleitfähigkeit ausgewählt. Dies ermöglicht, dass eine gewisse Elastizität bezüglich der Dicke des Laminierwerkzeuges gegeben ist.

Des Weiteren ist bevorzugt vorgesehen, dass die Tragstruktur aus einer Vielzahl von Stegen oder Rippen besteht, welche in Strömungsrichtung zwischen dem zumindest einen Zulauf und zumindest einen dazu beabstandeten Ablauf Ausnehmungen, Freiräume und/oder Öffnungen aufweist. Beispielsweise können durch die Stege Verbindungskanäle oder Kanalstrukturen geschaffen werden, die sich insbesondere in Längserstreckungsrichtung des Laminierwerkzeuges erstrecken. Alternativ können einzelne, sich senkrecht zur Erstreckungsebene des Laminierwerkzeuges erstreckende Stege, Stützen oder dergleichen ausgebildet sein, die zueinander beabstandet sind und somit ebenfalls eine durchströmbare Tragstruktur bilden. Dadurch kann das Kühl- und/oder Heizmedium über den Zulauf auf einer Seite des Laminierwerkzeuges zugeführt und über den zumindest einen Ablauf, insbesondere auf der gegenüberliegenden Seite, abgeführt werden.

Alternativ kann vorgesehen sein, dass an jeweils einer Außenwand ein Zu- und Ablauf für ein Kühl- und Heizmedium vorgesehen ist. Dadurch wird an einer Außenwand des Laminierwerkzeuges das Kühlmedium zu- und über den daran angeordneten Ablauf wieder abgeführt. Gegenüberliegend ist beispielsweise der Zu- und Ablauf für das Heizmedium vorgesehen. Eine solche Anordnung ermöglicht die Ausbildung von zwei getrennten Kreisläufen für das Kühl- und Heizmedium.

Des Weiteren ist bevorzugt vorgesehen, dass die Trägerplatte elektrische Anschlusskontakte zum Anschluss elektrischer Leitungen aufweist. Bei dieser Ausführungsform dient die Trägerplatte als Widerstandsheizelement, um die erforderliche Laminiertemperatur auf den zu laminierenden Stapel von Schichten einzubringen. Bei einem solchen Anwendungsfall wird das Laminierwerkzeug mittels dem Zu- und Ablauf durch ein Kühlmedium durchströmt, um nach dem Heizen des Stapels das Kühlen zu erzielen.

Alternativ kann vorgesehen sein, dass die Prägeplatte induktiv beheizbar ist. Des Weiteren kann vorgesehen sein, dass anstelle elektrischer Anschlusskontakte an der Prägeplatte an der Trägerplatte Heizelemente, insbesondere elektrische Heizelemente, angeordnet sind, welche die Trägerplatte und demzufolge die Tragstruktur und die Prägeplatte heizen, um die Laminiertemperatur auf den Stapel der Schichten zu übertragen.

Die Auflagefläche der Prägeplatte und die Stempelfläche sind bevorzugt mit der Membran einteilig verbunden. Dadurch kann durch Aufbringen eines erhöhten Innendruckes des durchströmenden Mediums eine Ansteuerung der Stempelfläche nach außen, beziehungsweise erhaben gegenüber der Auflagefläche, ermöglicht sein.

Die Prägeplatte des Laminierwerkzeuges weist bevorzugt eine eingebrachte, insbesondere eingravierte Struktur oder lithografische eingebrachte Hoch- und/oder Tiefprägung, z. B. als Punkt- und/oder Linienstruktur, auf. Dadurch kann während dem Laminieren gleichzeitig eine Prägung der Oberfläche der jeweils äußeren Lage des Laminatverbundes ermöglicht sein, um z.B. Linsenstrukturen oder Prägehologramme zu erzeugen.

Die der Erfindung zugrundeliegende Aufgabe wird des Weiteren durch eine Laminiervorrichtung zum Laminieren von mehreren in einem Stapel angeordneten Schichten zu einem Laminatverbund gelöst, welche ein Oberwerkzeug und ein Unterwerkzeug aufweist, die in eine geschlossene Arbeitsposition überführbar sind, wobei an dem Oberwerkzeug und Unterwerkzeug ein Laminierwerkzeug nach einer der vorbeschriebenen Ausführungsformen vorgesehen ist. Dies ermöglicht eine vereinfachte Ausbildung der Laminiervorrichtung. Es ist lediglich ein Laminierwerkzeug an dem Oberwerkzeug und Unterwerkzeug vorzusehen und die Laminiervorrichtung ist für den Laminiervorgang bereitgestellt.

Bei einem Laminierwerkzeug, welches eine Prägeplatte umfasst, welche eine durchgehende Auflagefläche aufweist, die gegebenenfalls eingebrachte Punkt- oder Linienstrukturen aufweist, jedoch ohne eine gegenüber der Auflagefläche ausfahrbare Stempelfläche ausgebildet ist, weist das Oberwerkzeug und/oder Unterwerkzeug Druckstempel auf, um auf der Trägerplatte zumindest partiell einzuwirken, damit die Prägeplatte eine Presskraft auf den Stapel ausübt. Bei einer solchen Ausführungsform kann vorgesehen sein, dass das Laminierwerkzeug lediglich zur Kühlung von einem Kühlmedium durchströmt wird und das Heizen des Laminierwerkzeuges elektrisch oder induktiv erfolgt oder das Heizen und Kühlen des Laminierwerkzeuges durch ein Heiz- und Kühlmedium durchgeführt wird. Bevorzugt sind mehrere in einem Raster angeordnete Druckstempel vorgesehen. Dabei kann eine gleiche Anzahl von Reihen und Spalten vorgesehen sein, wie beispielsweise 2x2 oder 3x3 oder 4x4, das heißt beispielsweise 4 Druckstempel in einer Reihe und 4 Spalten ä 4 Druckstempel.

Die der Erfindung zugrundeliegende Aufgabe wird des Weiteren durch ein Verfahren zum Laminieren von mehreren in einem Stapel angeordneten Schichten gelöst, bei dem jeweils ein Laminierwerkzeug nach einem der vorgenannten Ausführungsformen an dem Ober- und Unterwerkzeug befestigt wird und diese zueinander ausgerichtet werden, so dass nach dem Positionieren des Stapels zwischen dem oberen und unteren Laminierwerkzeug die Laminiervorrichtung geschlossen wird und das obere und untere Laminierwerkzeug Druck auf den Stapel aufbaut. Gleichzeitig oder bereits vor dem Auflegen des Stapels auf das Laminierwerkzeug wird das obere und untere Laminierwerkzeug beheizt und nach dem Laminiervorgang gekühlt. Nach dem Abkühlen des dann gebildeten Laminatverbundes wird die Laminiervorrichtung geöffnet und der Laminatverbund entnommen.

Dieses Verfahren weist den Vorteil auf, dass lediglich ein Einlegen des Stapels erforderlich. Darauffolgend wird das Verfahren zum Laminieren des Stapels gestartet und nach dem Abfüllen der fertige Laminatverbund entnommen. Ein zusätzliches Positionieren von Prägepolstern sowie eine anschließende Entnahme der Prägepolster sind nicht mehr erforderlich. Dadurch kann die Prozesszeit minimiert werden. Zudem ist die Handhabung vereinfacht und eine erhöhte Prozesssicherheit gegeben, da die Temperaturen zum Laminieren besser anzusteuern und zu überwachen sind.

Eine bevorzugte Ausgestaltung des Verfahrens sieht vor, dass die Trägerplatte des Laminierwerkzeuges durch Strom als Widerstandselement, induktiv oder durch separate Heizelemente aufgeheizt wird. Dadurch kann der Aufheizprozess elektronisch angesteuert und überwacht werden. Zudem kann in Abhängigkeit der eingebrachten Leistung ein schnelles Aufheizen gegeben sein.

In einem darauffolgenden Verfahrensschritt dieser vorgenannten alternativen Ausführungsform ist bevorzugt vorgesehen, dass das Laminierwerkzeug mit einem Kühlmedium zum Kühlen durchströmt wird. Dabei kann vorgesehen sein, dass das obere und untere Laminierwerkzeug gleichzeitig mit dem Kühlmedium versorgt und durchströmt werden oder dass eine aufeinanderfolgende Durchströmung der beiden Laminierwerkzeuge mit dem Kühlmedium angesteuert wird.

Eine weitere alternative Ausgestaltung des Verfahrens sieht vor, dass das obere und untere Laminierwerkzeug mit einem Heizmedium durströmt und aufgeheizt werden und anschließend mit einem Kühlmedium durchströmt und gekühlt werden. Bei dieser Ausführungsform ist vorgesehen, dass das Heizen und Kühlen nur durch das durchströmende Medium angesteuert wird.

Bei der alternativen Ausführungsform des Verfahrens, bei dem das Heizen und Kühlen des oberen und unteren Laminierwerkzeuges mit einem Medium erfolgt, kann wiederum sowohl eine gleichzeitige Durchströmung des oberen und unteren Laminierwerkzeuges als auch eine aufeinanderfolgende Durchströmung angesteuert werden.

Bei den beiden vorbeschriebenen alternativen Ausführungen des Verfahrens ist bevorzugt vorgesehen, dass ein Druck auf das obere und/oder untere Laminierwerkzeug durch zumindest einen im Oberwerkzeug und/oder Unterwerkzeug vorgesehenen Druckstempel aufgebracht wird. Dieser bzw. diese Druckstempel sind bevorzugt nur im Unterwerkzeug vorgesehen, können jedoch im Oberwerkzeug oder im Ober- und Unterwerkzeug vorgesehen sein. Dadurch kann eine partielle Druckkraft auf die Trägerplatte aufgebracht werden, welche wiederum aufgrund der Tragstruktur diese Druckkraft auf die Prägeplatte und somit auf den Stapel überträgt. Da mehrere Druckstempel, insbesondere in einem Rastermaß, vorgesehen sind, erfolgt die Druckverteilung partiell.

Eine weitere alternative Ausgestaltung des Verfahrens sieht vor, das zumindest das obere und/oder untere Laminierwerkzeug eine Trägerplatte mit einer Stempelfläche aufweist, die mit einer Membran zur Auflage verbunden ist und das obere und/oder untere Laminierwerkzeug mit einem unter erhöhtem Druck stehenden Heizmedium aufgeheizt und mit einem unter erhöhtem Druck stehenden Kühlmedium gekühlt wird. Dadurch wird durch das Heizmedium sowohl das Aufheizen des Laminierwerkzeuges als auch das Aufbringen eines Drucks auf die Stempelfläche und somit auf den Stapel bewirkt. Analoges gilt für das Kühlmedium. Somit kann bei dieser Ausführungsform auf separate Druckstempel verzichtet werden.

Bevorzugt ist bei der zuletzt genannten alternativen Ausführungsform des Verfahrens vorgesehen, dass während der Heizphase der Druck des Heizmediums nachgeregelt wird, damit der vorgegebene Laminierdruck aufrechterhalten und eine Dickenänderung des Laminierwerkzeuges kompensiert wird. Analoges gilt für die Kühlphase, das heißt, dass während der Kühlphase der Druck des Kühlmediums nachgeregelt wird, so dass der Laminierdruck während dem Abkühlen des Laminatverbundes aufrechterhalten bleibt und zumindest die Reduzierung der Dicke des Laminierwerkzeuges aufgrund der Abkühlung ausgeglichen wird.

Des Weiteren ist bevorzugt vorgesehen, dass als Heiz- und/oder Kühlmedium eine Flüssigkeit, insbesondere Wasser oder Öl, eingesetzt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht auf eine erste Ausführungsform eines erfindungsgemäßen Laminierwerkzeuges,
Figur 2 eine schematische Schnittansicht entlang der Linie I-I in Figur 1,
Figur 3 ein schematischer Teilschnitt entlang der Linie II-II in Figur 2,
Figur 4 eine schematische Ansicht einer Laminiervorrichtung mit Laminierwerkzeugen gemäß den Figuren 1 bis 3,
Figur 5 eine schematische Detailansicht einer alternativen Ausführungsform einer Laminiervorrichtung zu Figur 4,
Figur 6a u. b schematische Ansichten für eine Strömungsführung eines Mediums durch die Laminierwerkzeuge,
Figur 7 eine schematische Schnittansicht einer alternativen Ausführungsform einer Tragstruktur zu Figur 2,
Figur 8 eine schematische Ansicht auf eine erste alternative Ausführungsform des Laminierwerkzeuges zu Figur 1,
Figur 9 eine schematische Seitenansicht der Laminiervorrichtung mit einem Laminierwerkzeug gemäß Figur 8,
Figur 10a u. b schematische Ansichten von alternativen Strömungswegen in Laminierwerkzeugen gemäß Figur 8,
Figur 11 eine schematische Ansicht auf eine dritte alternative Ausführungsform des Laminierwerkzeuges zu Figur 1,
Figur 12 eine schematische Schnittansicht des Laminierwerkzeuges gemäß Figur 11,
Figur 13 eine schematische Seitenansicht einer Laminiervorrichtung mit einem Laminierwerkzeug gemäß Figur 11.

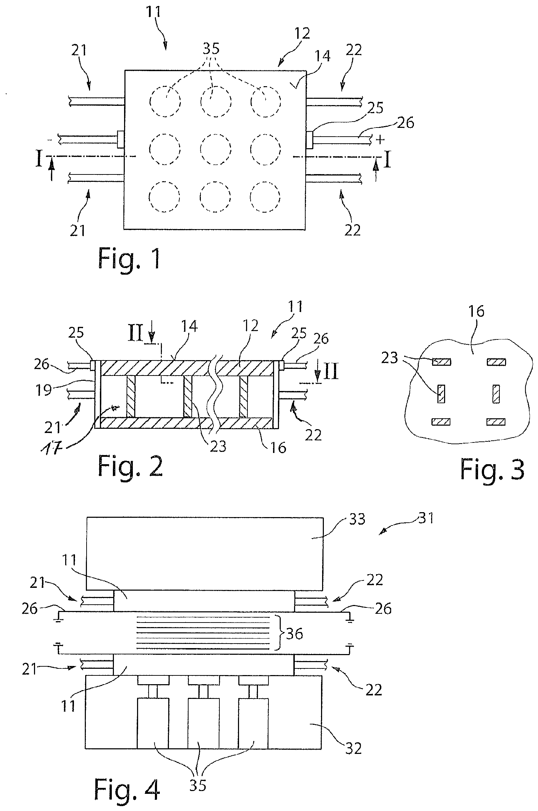

In Figur 1 ist eine schematische Ansicht auf eine erste Ausführungsform eines erfindungsgemäßen Laminierwerkzeuges 11 dargestellt. Eine schematische Schnittansicht entlang der Linie I-I geht aus Figur 2 hervor.

Das Laminierwerkzeug 11 umfasst eine Prägeplatte 12, welche eine beispielhaft quadratische oder rechteckförmige Kontur aufweist, entlang der sich eine Auflagefläche 14 erstreckt. Der Prägeplatte 12 gegenüberliegend ist eine Trägerplatte 16 vorgesehen, welche vorzugsweise parallel zur Prägeplatte 12 ausgerichtet ist. Dazwischenliegend ist eine Tragstruktur 17 vorgesehen, welche die Prägeplatte 12 zur Trägerplatte 16 beabstandet. Diese Tragstruktur 17 ist beispielsweise rippenförmig, stegförmig oder dergleichen ausgebildet. Diese Tragstruktur 17 ist von einer Außenwand 19 umgeben, welche an die Prägeplatte 12 und die Trägerplatte 16 anschließt. Dadurch wird ein geschlossenes Innenvolumen gebildet, innerhalb welchem die Tragstruktur 17 ausgebildet ist. An der Außenwand 19 sind ein Anschluss für zumindest einen Zulauf 21 und ein Anschluss für zumindest einen Ablauf 22 vorgesehen. Bei diesem Ausführungsbeispiel ist vorgesehen, dass beispielsweise auf einer Seite der Außenwand 19 zwei Zuläufe 21 und gegenüberliegend zwei Abläufe 22 vorgesehen sind.

Die Tragstruktur 17 ist derart ausgebildet, dass ein Medium, welches durch den Zulauf 21 in das Innenvolumen des Laminierwerkzeuges 11 gelangt über den Ablauf 22 abfließen kann. Beispielsweise können Mikrokanäle vorgesehen sein, die längs der flächigen Erstreckung des Laminierwerkzeuges 11 verlaufen. Alternativ können auch Stege 23 vorgesehen sein, wie dies beispielsweise in Figur 3 dargestellt ist, die zueinander beabstandet sind und/oder Durchbrechungen oder Ausnehmungen aufweisen, um ein Durchströmen eines Mediums zu ermöglichen.

Die Prägeplatte 12 ist bevorzugt dicker als die Trägerplatte 16 ausgebildet. Die Außenwand 19 ist bevorzugt als elastische Membrane vorgesehen, so dass die Prägeplatte 12 gegenüber der Trägerplatte 16 geringfügig federnd nachgiebig ausgebildet sein kann. Bevorzugt ist das Laminierwerkzeug 11 aus einem Material hergestellt und kann beispielsweise durch ein 3D-Druckverfahren, wie beispielsweise Lasersintern oder Laserschmelzen, aufgebaut sein. Alternativ kann auch vorgesehen sein, dass das Laminierwerkzeug 11 mehrteilig ausgebildet ist, wobei die einzelnen Komponenten für Wärmebehandlung oder durch Verklebung miteinander verbunden sind, jedenfalls dahingehend, dass ein geschlossenes, insbesondere mediendichtes, Innenvolumen ausgebildet ist.

Gemäß der ersten Ausführungsform ist vorgesehen, dass an der Trägerplatte 16 Anschlusskontakte 25 für elektrische Leitungen 26 vorgesehen sind, die zu einer nicht näher dargestellten Steuerung führen. Dadurch kann die Trägerplatte 16 als Widerstandsheizelement angesteuert werden, um eine gezielte und definierte Erwärmung zu ermöglichen.

Zum Kühlen dieses Laminierwerkzeuges 11 ist vorgesehen, dass ein gekühltes Medium über den Zulauf 21 zugeführt wird, das Innenvolumen durchströmt und über den Ablauf 22 abgeführt wird.

Auf der Auflagefläche 14 des Laminierwerkzeuges 11 kann eine Prägestruktur eingebracht sein. Bevorzugt ist eine punkt- oder linienförmige Struktur eingraviert.

In Figur 4 ist eine schematische Seitenansicht einer Laminiervorrichtung 31 dargestellt, welche ein Unterwerkzeug 32 sowie ein Oberwerkzeug 33 aufweist. An dem Ober- und Unterwerkzeug 32, 33 ist jeweils ein Laminierwerkzeug 11 gemäß den Figuren 1 bis 3 befestigt. Im Unterwerkzeug 32 sind beispielsweise mehrere Druckstempel 35 vorgesehen. Diese können gleichmäßig zur Auflagefläche 14 der Prägeplatte 12 verteilt angeordnet sein. Dies ist beispielsweise strichliniert in der Draufsicht in Figur 3 dargestellt. Durch diese Druckstempel 35 kann eine zusätzliche Kraft auf das Laminierwerkzeug 11 aufgebracht werden.

Zum Laminieren eines Stapels 36 aus mehreren Schichten zu einem Laminatverbund, bei welchem die Schichten unlösbar miteinander verbunden werden, wird der Stapel 36 auf ein unteres Laminierwerkzeug 11 aufgelegt. Darauffolgend wird die Laminiervorrichtung 31 geschlossen und insbesondere das Oberwerkzeug 33 auf das Unterwerkzeug 32 zubewegt, um einen Laminierdruck auf den Stapel 36 auszuüben. Bereits vor dem Schließen der Laminiervorrichtung 31 oder spätestens nach dem Schließen der Laminiervorrichtung 31 wird das Laminierwerkzeug 11 beheizt, insbesondere durch Bestromung der Prägeplatte 12 auf die Laminiertemperatur aufgeheizt, und die Laminiertemperatur so lange gehalten, bis die einzelnen Schichten des Stapels 36 zu einem Laminat miteinander verbunden sind. Darauffolgend wird die Bestromung unterbrochen und ein Medium zum Kühlen der Laminierwerkzeuge 11 durch die Tragstruktur 17 hindurchgeführt. Der Laminierdruck innerhalb der Laminiervorrichtung 31 wird so lange aufrechterhalten, bis der Laminatverbund abgekühlt ist. Anschließend wird die Laminiervorrichtung 31 geöffnet und das fertige Laminat kann von dem Unterwerkzeug 32 abgenommen werden. Darauffolgend ist die Laminiervorrichtung 31 wiederum für den nächsten Laminiervorgang bereit.

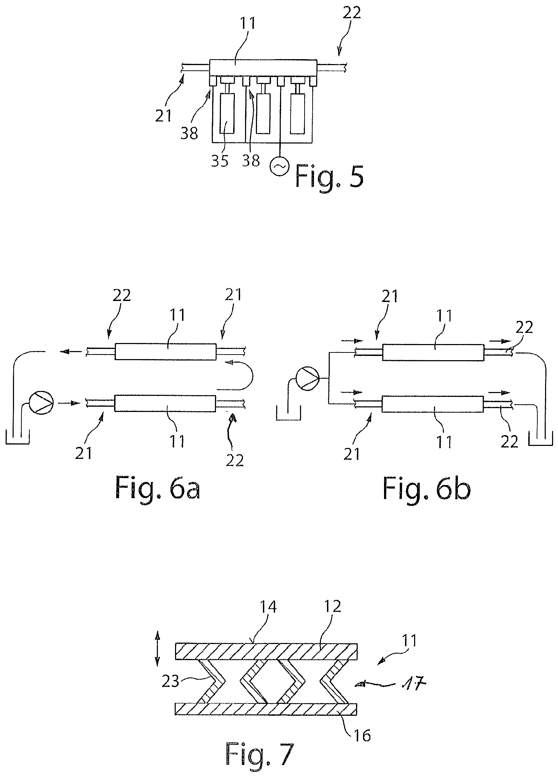

Alternativ zu der in Figur 4 dargestellten Ausführungsform der Laminiervorrichtung 31 kann vorgesehen sein, dass beispielsweise zwischen den Druckstempeln 35 an einer Unterseite des Laminierwerkzeuges 11, insbesondere an der Trägerplatte 16, Heizelemente 38, insbesondere elektrische Heizelemente, vorgesehen sind, wie dies in Figur 5 dargestellt ist. Durch diese Heizelemente 38 kann ebenfalls eine Erwärmung des Laminierwerkzeuges 11 durchgeführt werden.

Zum Kühlen des an dem Oberwerkzeug 33 und Unterwerkzeug 32 angeordneten oberen und unteren Laminierwerkzeugs 11 gemäß Figur 4 kann gemäß einer ersten Alternative in Figur 6a vorgesehen sein, dass das Kühlmedium zunächst das untere Laminierwerkzeug 11 durchströmt und anschließend dem oberen Laminierwerkzeug 11 zugeführt wird. Diese Reihenfolge kann auch vertauscht sein. Des Weiteren kann gemäß Figur 6b alternativ vorgesehen sein, dass die beiden Laminierwerkzeuge 11 gleichzeitig durchströmt werden.

Der Stapel 36, der aus mehreren Schichten besteht, kann beispielsweise zumindest jeweils eine äußere Schicht aus einem thermoplastischen Elastomer, welche durch Einbringen einer Temperatur aufschmelzbar ist, umfassen, so dass beispielsweise diese äußeren Schichten unter Einschluss von inneren Schichten, die beispielsweise aus Papier bestehen können, eine geschlossene Umhüllung bilden. Alternativ können die einzelnen Schichten auch alle aus einem thermoplastischen Elastomer bestehen, so dass diese zumindest an der Oberfläche anschmelzen oder aufschmelzen und sich mit der benachbarten Schicht zu einem Laminatschichtverbund, wie beispielsweise einer Karte, insbesondere einer PC-Karte, verbinden. Ein solcher Laminatverbund kann eine Zutrittskarte, Identifikationskarte, Scheckkarte oder personalisierte Karte, wie beispielsweise ein Personalausweis oder dergleichen, sein.

In Figur 7 ist eine alternative Ausführungsform eines Aufbaus für das Laminierwerkzeug 11 im Querschnitt zu Figur 2 dargestellt. Bei dieser Ausführungsform ist vorgesehen, dass die Stege 23 beispielsweise geknickt bzw. X-förmig oder rautenförmig einander zugeordnet sind. Dadurch kann eine gewisse Nachgiebigkeit der Prägeplatte 12 zur Trägerplatte 16 ermöglicht sein.

Anderweitige Strukturen zum Aufbau der Stege, wie beispielsweise schräg gestellte Stege, die alle in gleicher Richtung ausgerichtet sind, können ebenso vorgesehen sein.

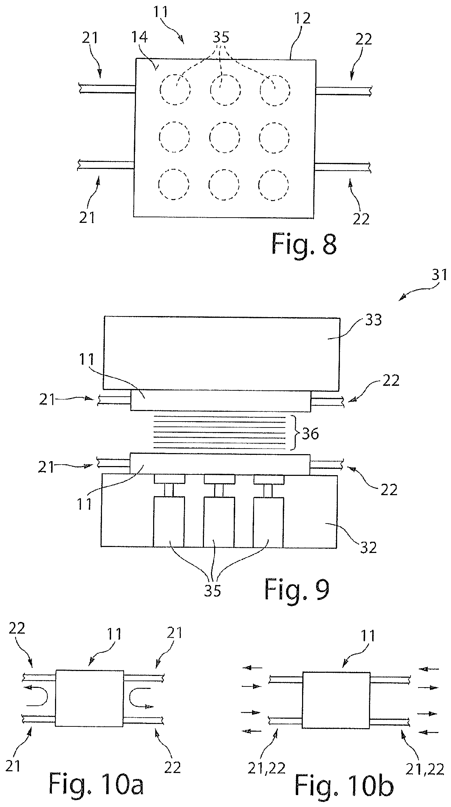

Das Laminierwerkzeug 11 gemäß Figur 8 ist gegenüber dem in Figur 1 dahingehend vereinfacht, dass der Anschlusskontakt und die Zuführung der elektrischen Anschlussleitungen entfallen. Das Aufheizen als auch das Kühlen des Laminierwerkzeuges 11 erfolgt durch das durchströmende Medium. Das Medium wird über eine nicht näher dargestellte Steuerung und entsprechende Heiz- und Kühlaggregate und/oder -elemente angesteuert, aufgeheizt, gekühlt und/oder überwacht.

In Figur 9 ist die Laminiervorrichtung 31 mit der alternativen Ausführungsform des Laminierwerkzeuges 11 gemäß Figur 8 dargestellt. Die Laminierwerkzeuge 11 werden mittels eines durchfließenden Mediums beheizt und anschließend gekühlt. Im Übrigen gilt der analoge Aufbau zu der vorgenannten Ausführungsform gemäß Figur 1.

Zur Durchströmung des Heiz- und/oder Kühlmediums durch die Laminierwerkzeuge 11 kann gemäß Figur 10a vorgesehen sein, dass beispielsweise auf einer Seite der Außenwand 19 ein Zu- und Ablauf 21, 22 für das Heizmedium und auf der gegenüberliegenden Seite an der Außenwand 19 ein Zu- und Ablauf 21, 22 für das Kühlmedium vorgesehen ist.

Alternativ kann gemäß Figur 10b auch vorgesehen sein, dass auf einer Seite des Laminierwerkzeuges 11 der Zulauf 21 für das Heizmedium und gegenüberliegend der Ablauf 22 für das Heizmedium vorgesehen ist und der Ablauf 22 für das Heizmedium wiederum darauffolgend den Zulauf 21 für das Kühlmedium bildet. Dadurch kann der Heiz- und Kühlstrom in entgegengesetzter Richtung das Laminierwerkzeug 11 durchströmen. Alternativ kann auch vorgesehen sein, dass der oder die Zuläufe 21 auf der einen Seite sowohl für die Zuführung des Heiz- als auch darauffolgend für das Kühlmedium vorgesehen sind, so dass sowohl das Heiz- als auch das Kühlmedium jeweils über den Ablauf 22 aufeinanderfolgend abgeführt werden.

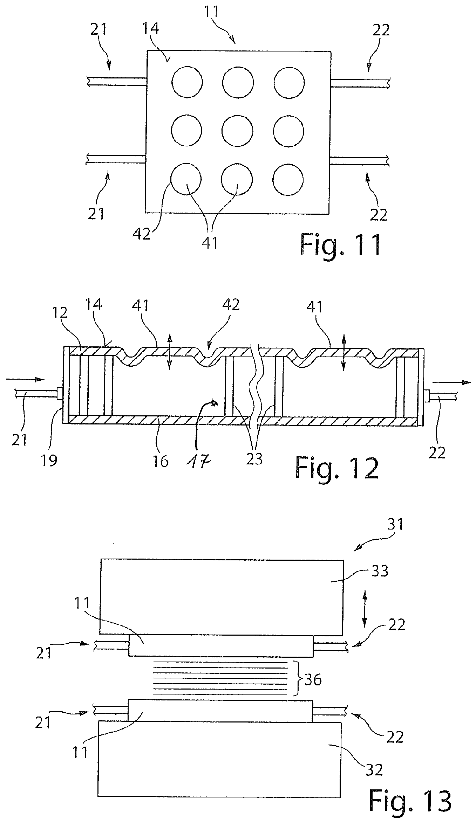

In Figur 11 ist eine weitere alternative Ausführungsform des Laminierwerkzeuges 11 zu Figur 1 dargestellt. Die Figur 12 zeigt eine schematische Schnittansicht gemäß der Ausführungsform in Figur 11.

Bei dieser alternativen Ausführungsform ist vorgesehen, dass die Auflagefläche 14 Stempelflächen 41 aufweist, welche durch eine Membran 42 mit der Auflagefläche 14 verbunden sind. Bevorzugt sind die Auflagefläche 14, die Membran 42 und die Stempelfläche 41 einteilig ausgebildet. Beispielsweise kann die Membran 42 durch eine Materialverjüngung oder durch eine oder mehrere umlaufende Sicken oder Vertiefungen ausgebildet sein. Im Übrigen ist der Aufbau dieser Ausführungsform des Laminierwerkzeuges 11 analog zu den vorbeschriebenen Ausführungsformen. Durch die Ausgestaltung dieser Stempelflächen 41 ist ermöglicht, dass beim Aufbau eines überhöhten Drucks im Innenvolumen die Stempelfläche 41 bzw. die Stempelflächen 41 aktivierbar sind, das heißt, dass diese sich gegenüber der Auflagefläche 14 abhebt, insbesondere auch deshalb, weil die Stempelfläche 41 stegfrei ausgebildet ist.

In Figur 13 ist die Laminiervorrichtung 31 mit einem oberen und unteren Laminierwerkzeug 11 gemäß den Figuren 11 und 12 dargestellt. Die Auflageflächen 14 mit den Stempelflächen 41 der Laminierwerkzeuge 11 weisen zum Stapel 36.

Nach dem Schließen der Laminiervorrichtung 31 wird das Laminierwerkzeug 11 mit einem aufgeheizten Medium durchströmt. Das Aufheizen des Laminierwerkzeuges 11 kann auch bereits vor dem Schließen der Laminiervorrichtung 31 erfolgen. Jedenfalls nach dem Schließen der Laminiervorrichtung 31, das heißt dem Aufbringen eines Laminierdruckes zwischen dem Oberwerkzeug 33 und dem Unterwerkzeug 32 auf den Stapel 36, kann ein zusätzlicher Druck im Laminierwerkzeug 11 durch das aufgeheizte Medium erzeugt und aufgebaut werden, um die Stempelflächen 41 anzusteuern. Dies erfolgt insbesondere zum Ausgleich von lokalen Unebenheiten oder nicht parallel ausgerichteten Schichten. Die Stempelflächen 41 sind dabei bevorzugt gleichmäßig über die Auflagefläche 14 verteilt angeordnet, beispielsweise in mehreren Reihen und Spalten, wie dies in Figur 11 dargestellt ist.

Nach dem Laminieren der einzelnen Schichten des Stapels 36 wird zum Kühlen der Laminierwerkzeuge 11 ein gekühltes Medium durch die Laminierwerkzeuge 11 hindurchgeführt. Dabei kann das Kühlmedium mit einem solchen Druck hindurchgeführt werden, dass die zuvor aufgebrachte Presskraft auf den Stapel 36 aufrechterhalten bleibt und gleichzeitig eine Schwindung in der Dicke der Laminierwerkzeuge 11 aufgrund der Abkühlung kompensiert wird.

### Bezugszahlenliste

11. Laminierwerkzeug
12. Prägeplatte
14. Auflagefläche
16. Trägerplatte
17. Tragstruktur
18. Außenwand
21. Zulauf
22. Ablauf
23. Steg
25. Anschlusskontakt
26. elektrische Leitung
31. Laminiervorrichtung
32. Oberwerkzeug
33. Unterwerkzeug
35. Druckstempel
36. Stapel
38. Heizelement
41. Stempelfläche
42. Membran

## Patentansprüche

1. Laminierwerkzeug für eine Laminiervorrichtung (31) zum Laminieren von mehreren in einem Stapel (36) angeordneten Schichten zu einem Laminatverbund, mit einer Prägeplatte (12) zur Auflage des Stapels (36), mit einer Tragstruktur (17) und mit einer Trägerplatte (16), wobei die Tragstruktur (17) zwischen der Prägeplatte (12) und der Trägerplatte (16) vorgesehen ist, welche von einer nach außen geschlossenen Außenwand (19) umgeben ist und mit der Prägeplatte (12) und Trägerplatte (16) ein geschlossenes Innenvolumen bildet, und mit zumindest einem Zulauf (21) und einem Ablauf (22) zum Zuführen und Abführen eines das Innenvolumen durchströmenden Mediums, **dadurch gekennzeichnet, dass** in der Prägeplatte (12) zumindest eine von einer Membran (42) umgebene Stempelfläche (41) vorgesehen ist.

2. Laminierwerkzeug nach Anspruch 1, **dadurch gekennzeichnet, dass** die Trägerplatte (16), die Tragstruktur (17), die Prägeplatte (12) sowie die Außenwand (19) als ein monolithisches Bauteil ausgebildet ist.

3. Laminierwerkzeug nach Anspruch 1 oder 2, **dadurch gekennzeichnet, dass** die Prägeplatte (12), die Trägerplatte (16), die Tragstruktur (17) und die Außenwand (19) aus Metall, insbesondere aus Titan oder Edelstahl, hergestellt sind.

4. Laminierwerkzeug nach einem der vorhergehenden Ansprüche, **dadurch gekennzeichnet, dass** die Prägeplatte (12) in der Wandstärke dicker als die Trägerplatte (16) ausgebildet ist.

5. Laminierwerkzeug nach einem der vorhergehenden Ansprüche, **dadurch gekennzeichnet, dass** die Außenwand (19) als eine elastische Membran ausgebildet ist.

6. Laminierwerkzeug nach einem der vorhergehenden Ansprüche, **dadurch gekennzeichnet, dass** die Tragstruktur (17) aus einer Vielzahl von Stegen oder Rippen besteht, welche in Strömungsrichtung zwischen dem zumindest einen Zulauf (21) und zumindest einen Ablauf (22) Strömungswege bilden.

7. Laminierwerkzeug nach einem der vorhergehenden Ansprüche, **dadurch gekennzeichnet, dass** an jeweils einer Außenwand (19) ein Zulauf (21) und Ablauf (22) für ein Heizmedium und ein Kühlmedium vorgesehen ist.

8. Laminierwerkzeug nach einem der vorhergehenden Ansprüche, **dadurch gekennzeichnet, dass** die Prägeplatte (12) elektrische Anschlusskontakte (25) zum Anschluss von elektrischen Leitungen (26) aufweist oder induktiv beheizbar ist oder an der Trägerplatte (16) Heizelemente (38) angeordnet sind.

9. Laminierwerkzeug nach Anspruch 1, **dadurch gekennzeichnet, dass** die Auflagefläche (14) und die Stempelfläche (41) mit der Membran (42) einteilig verbunden sind.

10. Laminierwerkzeug nach einem der vorhergehenden Ansprüche, **dadurch gekennzeichnet, dass** die Prägeplatte (12) eine punkt- und/oder linienförmige Struktur aufweist.

11. Laminiervorrichtung zum Laminieren von mehreren in einem Stapel (36) angeordneten Schichten zu einem Laminatverbund, mit einem Oberwerkzeug (33) und einem Unterwerkzeug (32), die zum Laminieren des Stapels (36) in eine geschlossene Arbeitsposition überführbar sind, **dadurch gekennzeichnet, dass** an dem Oberwerkzeug (33) und dem Unterwerkzeug (32) jeweils ein Laminierwerkzeug (11) nach einem der vorhergehenden Ansprüche vorgesehen ist.

12. Laminiervorrichtung nach Anspruch 11, **dadurch gekennzeichnet, dass** zumindest im Oberwerkzeug (33) oder Unterwerkzeug (32) Druckstempel (35) vorgesehen sind, die an einer Außenseite der Laminierwerkzeuge (11) angreifen.

13. Verfahren zum Laminieren von mehreren in einem Stapel (36) angeordneten Schichten zu einem Laminatverbund, mit einer Laminiervorrichtung (31), welche ein Oberwerkzeug (33) und ein Unterwerkzeug (32) aufweist, **dadurch gekennzeichnet,**
- **dass** an dem Oberwerkzeug (33) und Unterwerkzeug (32) jeweils ein Laminierwerkzeug (11) nach einem der vorhergehenden Ansprüche befestigt ist und die Laminierwerkzeuge (11) zueinander ausgerichtet werden,
- **dass** zwischen dem oberen und unteren Laminierwerkzeug (11) der Stapel (36) positioniert wird,
- **dass** über das obere und untere Laminierwerkzeug (11) mittels dem Oberwerkzeug (33) und Unterwerkzeug (32) Druck auf den Stapel (36) aufgebaut wird,
- **dass** das obere und untere Laminierwerkzeug (11) zum Laminieren der Schichten des Stapels (36) beheizt und anschließend zum Kühlen des Laminatverbundes gekühlt werden und
- **dass** nach dem Abkühlen des Laminatverbundes das Oberwerkzeug (33) und Unterwerkzeug (32) in eine Öffnungsposition übergeführt werden und der Laminatverbund entnommen wird.

14. Verfahren nach Anspruch 13, **dadurch gekennzeichnet, dass** nach dem Heizen die Laminierwerkzeuge (11) mit einem Kühlmedium zum Kühlen durchströmt werden und das obere und untere Laminierwerkzeug (11) gleichzeitig oder aufeinanderfolgend von dem Kühlmedium durchströmt werden, insbesondere das obere und untere Laminierwerkzeuge (11) mit einem Heizmedium durchströmt und aufgeheizt und anschließend mit einem Kühlmedium durchströmt und gekühlt werden.

15. Verfahren nach einem der Ansprüche 13 oder 14, **dadurch gekennzeichnet, dass** zumindest in dem Oberwerkzeug (33) oder Unterwerkzeug (32) Druckstempel (35) vorgesehen sind, durch welche während der Anordnung des Oberwerkzeugs (33) und Unterwerkzeugs (32) in einer Arbeitsposition partiell eine Druckkraft auf die Trägerplatte (16) des Laminierwerkzeuges (11) aufgebracht wird.

16. Verfahren nach Anspruch 13, **dadurch gekennzeichnet, dass** zumindest das obere oder untere Laminierwerkzeug (11) eine Prägeplatte (12) mit einer Stempelfläche (41) aufweist, die mit einer Membran (42) zur Auflage (14) verbunden ist, welche mit einem unter erhöhtem Druck stehenden Heizmedium aufgeheizt wird und die Stempelflächen (41) während einer Heizphase betätigt werden, vorzugsweise während der Heizphase der Druck des Heizmediums nachgeregelt wird, damit der vorgegebene Laminierdruck aufrechterhalten und eine Änderung in der Dicke des Laminierwerkzeugs (11) kompensiert wird, und dass zumindest das obere oder untere Laminierwerkzeug (11) mit einem unter Druck stehenden Kühlmedium gekühlt wird und die Stempelflächen (41) während der Kühlphase beaufschlagt werden, vorzugsweise während der Kühlphase der Druck des Kühlmediums nachgeregelt wird, damit der vorgegebene Laminierdruck aufrechterhalten und eine Änderung der Dicke des Laminierwerkzeuges (11) kompensiert wird.

17. Verfahren nach einem der Ansprüche 13 bis 16, **dadurch gekennzeichnet, dass** als Medium zumindest zum Heizen oder Kühlen eine Flüssigkeit, insbesondere ein Wasser oder ein Öl, eingesetzt wird.

## Claims

1. A laminating tool for a laminating device (31) for laminating a plurality of layers disposed in a stack (36) so as to obtain a laminated composite, having an embossing plate (12) for the stack (36) to rest upon, a support structure (17), and a carrier plate (16), the support structure (17) being provided between the embossing plate (12) and the carrier plate (16) and being surrounded by an outer wall (19) which is closed to the outside and, together with the embossing plate (12) and the carrier plate (16) forms a closed inner volume, and having at least one feed pipe (21) and at least one discharge pipe (22) for feeding and discharging a fluid flowing through said inner volume, **characterised in that** in the embossing plate (12) at least one die surface (41) surrounded by a membrane (42) is provided.

2. The laminating tool as claimed in claim 1, **characterised in that** the carrier plate (16), the support structure (17), the embossing plate (12), and the outer wall (19) are formed as a monolithic component.

3. The laminating tool as claimed in claim 1 or 2, **characterised in that** the carrier plate (12), the support structure (16), the embossing plate (17), and the outer wall (19) are made of metal, in particular of titanium or stainless steel.

4. The laminating tool as claimed in any of the preceding claims, **characterised in that** the wall thickness of the embossing plate (12) is greater than that of the carrier plate (16).

5. The laminating tool as claimed in any of the preceding claims, **characterised in that** the outer wall (19) is realised as an elastic membrane.

6. The laminating tool as claimed in any of the preceding claims, **characterised in that** the support structure (17) consists of a multitude of lands or ribs which form flow paths in the direction of flow extending between the at least one feed pipe (21) and the at least one discharge pipe (22).

7. The laminating tool as claimed in any of the preceding claims, **characterised in that** any given outer wall (19) has a heating medium and cooling medium feed pipe (21) or discharge pipe (22) formed thereon.

8. The laminating tool as claimed in any of the preceding claims, **characterised in that** the embossing plate (12) has electric connection contacts (25) for connecting electric lines (26) or is heatable by induction or has heating elements (38) disposed on the carrier plate (16).

9. The laminating tool as claimed in claim 1, **characterised in that** the support surface (14) and the die surface (41) are integrally connected to the membrane (42).

10. The laminating tool as claimed in any of the preceding claims, **characterised in that** the embossing plate (12) has a punctiform and/or linear structure.

11. A laminating device for laminating a plurality of layers disposed in a stack (36) so as to obtain a laminated composite, having an upper tool (33) and a lower tool (32) which are transferable to a closed working position in order to laminate the stack (36), **characterised in that** a laminating tool (11) as claimed in any of the preceding claims is provided on the upper tool (33) an on the lower tool (32), respectively.

12. The laminating device as claimed in claim 11, **characterised in that** at least one of the upper tool (33) and the lower tool (32) has compression dies (35) provided therein which are applied to an outer surface of the laminating tools (11).

13. A method for laminating a plurality of layers arranged in a stack (36) so as to obtain a laminated composite, said method involving a laminating device (31) which has an upper tool (33) and a lower tool (32), **characterised in that**
- a laminating tool (11) as claimed in any of the preceding claims is fastened to each of the upper tool (33) and the lower tool (32) and said laminating tools (11) are aligned with respect to each other,
- the stack (36) is positioned between the upper and lower laminating tools (11),
- pressure is built up and exerted on the stack (36) via the upper and lower laminating tools (11) by means of the upper tool (32) and the lower tool (33),
- said upper and lower laminating tools (11) are heated for laminating the layers of the stack (36) and are subsequently cooled for cooling the laminated composite, and
- once the cooling of the laminated composite is accomplished, the upper tool (33) and the lower tool (32) are transferred into an opening position and the laminated composite is removed.

14. The method as claimed in claim 13, **characterised in that** subsequent to the heating process, a cooling medium is made to flow through the laminating tools (11) for cooling thereof and the cooling medium flows through the upper and the lower laminating tools (11) either simultaneously or consecutively, with, in particular, a heating medium flowing through said upper and lower laminating tools (11) for heating thereof and a cooling medium flowing subsequently therethrough for cooling thereof.

15. The method as claimed in any one of claims 13 or 14, **characterised in that** at least one of the upper tool (33) and the lower tool (32) has compression dies (35) provided therein by means of which a compressive force is partially applied to the carrier plate (16) of the laminating tool (11) as the upper tool (33) and the lower tool (32) are disposed in a working position.

16. The method as claimed in claim 13, **characterised in that** at least one of the upper and lower laminating tools (11) has an embossing plate (12) including a die surface (41) which is connected to the support surface (14) by means of a membrane (42) heated using a heating medium under increased pressure, and **in that** the die surfaces (41) are actuated during a heating phase and the pressure of the heating medium is preferably readjusted during said heating phase so that the predetermined laminating pressure is maintained and any change in the thickness of the laminating tool (11) is compensated for, and **in that** at least one of the upper and lower laminating tools (11) is cooled using a cooling medium under pressure, and pressure is applied to the die surfaces (41) during the cooling phase and the pressure of the cooling medium is preferably readjusted during said cooling phase so that the predetermined laminating pressure is maintained and any change in the thickness of the laminating tool (11) is compensated for.

17. The method as claimed in any one of claims 13 to 16, **characterised in that** a liquid, in particular some type of water or oil, is used as a medium at least for heating or cooling purposes.

## Revendications

1. Outil de stratification pour un dispositif de stratification (31) destiné à stratifier plusieurs couches disposées en une pile (36) en vue de former un composite stratifié, pourvu d'une plaque d'estampage (12) qui sert d'appui à la pile (36), d'une structure porteuse (17) et d'une plaque de support (16), la structure porteuse (17) étant prévue entre la plaque d'estampage (12) et la plaque de support (16) et étant entourée par une paroi extérieure (19) fermée vers l'extérieur, formant ainsi avec la plaque d'estampage (12) et la plaque de support (16) un volume intérieur fermé, et pourvu d'au moins un tuyau d'amenée (21) et d'au moins un tuyau d'évacuation (22) destinés respectivement à amener et à évacuer un fluide qui traverse le volume intérieur, **caractérisé en ce que** dans la plaque d'estampage (12) est prévue au moins une surface de poinçon (41) entourée d'une membrane (42).

2. Outil de stratification selon la revendication 1, **caractérisé en ce que** la plaque de support (16), la structure porteuse (17), la plaque d'estampage (12) ainsi que la paroi extérieure (19) sont réalisées sous la forme d'une pièce monolithique.

3. Outil de stratification selon la revendication 1 ou 2, **caractérisé en ce que** la plaque d'estampage (12), la plaque de support (16), la structure porteuse (17) et la paroi extérieure (19) sont réalisées en métal, en particulier en titane ou en acier inoxydable.

4. Outil de stratification selon l'une quelconque des revendications précédentes, **caractérisé en ce que** la plaque d'estampage (12) présente une épaisseur de paroi plus épaisse que la plaque de support (16).

5. Outil de stratification selon l'une quelconque des revendications précédentes, **caractérisé en ce que** la paroi extérieure (19) est réalisée en tant que membrane élastique.

6. Outil de stratification selon l'une quelconque des revendications précédentes, **caractérisé en ce que** la structure porteuse (17) se compose d'une multitude d'éléments horizontaux ou nervures qui forment, dans le sens d'écoulement, des trajets d'écoulement entre ledit au moins un tuyau d'amenée (21) et ledit au moins un tuyau d'évacuation (22).

7. Outil de stratification selon l'une quelconque des revendications précédentes, **caractérisé en ce qu'**au niveau d'une paroi extérieure donnée (19) est prévu soit un tuyau d'amenée (21) soit un tuyau d'évacuation (22) pour un fluide de chauffage et un fluide de refroidissement.

8. Outil de stratification selon l'une quelconque des revendications précédentes, **caractérisé en ce que** la plaque d'estampage (12) présente des contacts de raccordement électrique (25) destinés au raccordement de lignes électriques (26) et peut être chauffée par induction ou **en ce que** des éléments chauffants (38) sont disposés sur la plaque de support (16).

9. Outil de stratification selon la revendication 1, **caractérisé en ce que** la surface d'appui (14) et la surface de poinçon (41) sont reliées à la membrane (42) de manière à former une seule pièce.

10. Outil de stratification selon l'une quelconque des revendications précédentes, **caractérisé en ce que** la plaque d'estampage (12) présente une structure ponctuelle et/ou linéaire.

11. Dispositif de stratification destiné à stratifier plusieurs couches disposées en une pile (36) en vue de former un composite stratifié, pourvu d'un outil supérieur (33) et d'un outil inférieur (32), lesquels peuvent passer dans une position de travail fermée en vue de la stratification de la pile (36), **caractérisé en ce que** sur l'outil supérieur (33) et sur l'outil inférieur (32) est prévu respectivement un outil de stratification (11) selon l'une quelconque des revendications précédentes.

12. Dispositif de stratification selon la revendication 11, **caractérisé en ce qu'**au moins dans l'outil supérieur (33) ou l'outil inférieur (32) sont prévus des poinçons de compression (35) qui appuient sur une face extérieure des outils de stratification (11) .

13. Procédé destiné à stratifier plusieurs couches disposées en une pile (36) en vue de former un composite stratifié grâce à un dispositif de stratification (31) qui présente un outil supérieur (33) et un outil inférieur (32), **caractérisé en ce que**
- un outil de stratification (11) selon l'une quelconque des revendications précédentes est fixé respectivement sur l'outil supérieur (33) et l'outil inférieur (32) et que lesdits outils de stratification (11) sont orientés l'un vers l'autre,
- la pile (36) est positionnée entre les outils de stratification (11) supérieur et inférieur,
- de la pression est appliquée sur la pile (36) par l'intermédiaire des outils de stratification (11) supérieur et inférieur, et ce au moyen de l'outil supérieur (32) et de l'outil inférieur (33),
- les outils de stratification (11) inférieur et supérieur sont chauffés en vue de stratifier les couches de la pile (36) et sont ensuite refroidis en vue de refroidir le composite stratifié, et
- une fois le composite stratifié refroidi, l'outil supérieur (33) et l'outil inférieur (32) passent dans une position d'ouverture et le composite stratifié est retiré.

14. Procédé selon la revendication 13, **caractérisé en ce que** après le processus de chauffage, les outils de stratification (11) sont traversés par un fluide de refroidissement en vue d'être refroidis et que les outils de stratification (11) supérieur et inférieur sont traversés de manière simultanée ou consécutive par le fluide de refroidissement, **en ce qu'**en particulier lesdits outils de stratification (11) supérieur et inférieur sont traversés par un fluide de chauffage et sont ainsi chauffés et sont ensuite traversés par un fluide de refroidissement et sont ainsi refroidis.

15. Procédé selon l'une quelconque des revendications 13 ou 14, **caractérisé en ce qu'**au moins dans l'outil supérieur (33) ou l'outil inférieur (32) sont prévus des poinçons de compression (35) grâce auxquels, pendant que l'outil supérieur (33) et l'outil inférieur (32) sont disposés dans une position de travail, une force de compression est appliquée partiellement sur la plaque de support (16) de l'outil de stratification (11).

16. Procédé selon la revendication 13, **caractérisé en ce qu'**au moins l'outil de stratification (11) supérieur ou inférieur présente une plaque d'estampage (12) pourvue d'une surface de poinçon (41) qui est reliée à une membrane (42) servant d'appui (14) laquelle est chauffée grâce à un fluide de chauffage sous pression élevée et que les surfaces de poinçon (41) sont actionnées pendant une phase de chauffage, que de préférence la pression du fluide de chauffage est réajustée pendant la phase de chauffage afin de maintenir la pression de stratification prédéfinie et de compenser ainsi un changement au niveau de l'épaisseur de l'outil de stratification (11), et **en ce qu'**au moins l'outil de stratification (11) supérieur ou inférieur est refroidi grâce à un fluide de refroidissement sous pression et que les surfaces de poinçon (41) sont mises sous pression pendant la phase de refroidissement, que la pression du fluide de refroidissement est réajustée de préférence pendant la phase de refroidissement afin de maintenir la pression de stratification prédéfinie et de compenser ainsi un changement de l'épaisseur de l'outil de stratification (11).

17. Procédé selon l'une quelconque des revendications 13 à 16, **caractérisé en ce que** le fluide utilisé au moins pour le chauffage ou le refroidissement est un liquide, en particulier une eau ou une huile.
